# DEMANDE DE BREVET EUROPEEN

(11) **EP 1 298 581 A1**
(43) Date de publication de la demande: **02.04.2003**
(21) Numéro de dépôt: 01402488.9
(22) Date de dépôt: 27.09.2001
(51) Int. Cl.: G06N 3/04, G06N 3/08

(54) **Procédé et dispositif pour calculer les valeurs des neurones d'un réseau neuronal**

(71) Demandeur: C.S.E.M. CENTRE SUISSE D'ELECTRONIQUE ET DE MICROTECHNIQUE SA, 2007 Neuchâtel (CH)
(72) Inventeur: Masgonty, Jean-Marc, 2074 Marin (CH); Vuilleumier, Philippe, 1400 Yverdon (CH); Masa, Peter, 2208 Les Hauts-Geneveys (CH); Piguet, Christian, 2000 Neuchatel (CH)
(74) Mandataire: Colas, Jean-Pierre

(57) **Abrégé**

Ce procédé consiste à calculer les valeurs des neurones (neurones cibles) en procédant par sous-couche (S1) de ces neurones cibles. De ce fait, il est possible d'utiliser pour ce calcul toujours le même groupe de poids à multiplier respectivement avec les neurones sources y afférents situés dans la couche sous-jacente (Ca) du réseau neuronal.

## Description

La présente invention est relative à un procédé de calcul des valeurs des neurones dans un réseau neuronal conforme au préambule de la revendication 1, ainsi qu'à un dispositif pour la mise en oeuvre de ce procédé conforme au préambule de la revendication 9.

Les procédés de calcul de ce type connus de la technique antérieure opèrent par le calcul complet de chaque neurone du réseau neuronal avant d'entamer le calcul de la valeur du neurone suivant. Cette méthode nécessite de nombreux accès aux mémoires dans lesquelles les grandeurs intervenant dans la formation des valeurs des neurones sont stockées. Ces procédés sont donc lents et impliquent une consommation élevée lors du calcul.

L'invention a pour but de fournir un procédé de calcul et un dispositif pour sa mise en oeuvre ne présentant pas les inconvénients exposés ci-dessus.

L'invention a donc pour objet un procédé de calcul du type générique évoqué ci-dessus qui présente les particularités de la partie caractérisante de la revendication 1.

Grâce à ces particularités, on peut utiliser pour le calcul des neurones cibles d'une même sous-couche un même groupe de poids qu'il suffit d'extraire une seule fois d'une mémoire de poids. Il est ainsi possible de réduire considérablement les accès de mémoire et ainsi la consommation nécessaire pour effectuer les calculs.

D'autres particularités du procédé de l'invention résultent des sous-revendications 2 à 8.

L'invention a également pour objet un dispositif de calcul pour la mise en oeuvre du procédé de l'invention, les particularités de ce dispositif de calcul résultant de la revendication 9.

D'autres caractéristiques et avantages de la présente invention apparaîtront au cours de la description qui va suivre, donnée uniquement à titre d'exemple et faite en se référant aux dessins annexés sur lesquels:
- la figure 1 est une représentation symbolique d'un réseau neuronal, connu en soi, permettant, à titre d'exemple seulement, d'explorer et de coder de l'information d'image, réseau dans lequel peut être mis en oeuvre le procédé selon l'invention;
- la figure 2 montre une partie du réseau neuronal de la figure 1 pour illustrer comment, par le procédé de l'invention, la valeur d'un neurone peut être calculée;
- la figure 3 est un schéma simplifié d'un dispositif de calcul permettant de mettre en oeuvre le procédé selon l'invention;
- la figure 4 illustre, en montrant une partie du réseau de la figure 1, comment se déroule le transfert des valeurs de neurone vers des bancs de registres en vue de leur traitement dans une unité de calcul conçue pour l'obtention des valeurs de neurones cibles à partir de neurones sources;
- la figure 5 illustre, en montrant une partie du réseau de la figure 1, comment les valeurs des neurones sources sont rangées dans différentes mémoires du dispositif de calcul de la figure 5; et
- la figure 6 illustre, en montrant une partie du réseau neuronal de la figure 1, comment le calcul des valeurs des neurones cibles progresse latéralement dans les sous-couches de ce réseau.

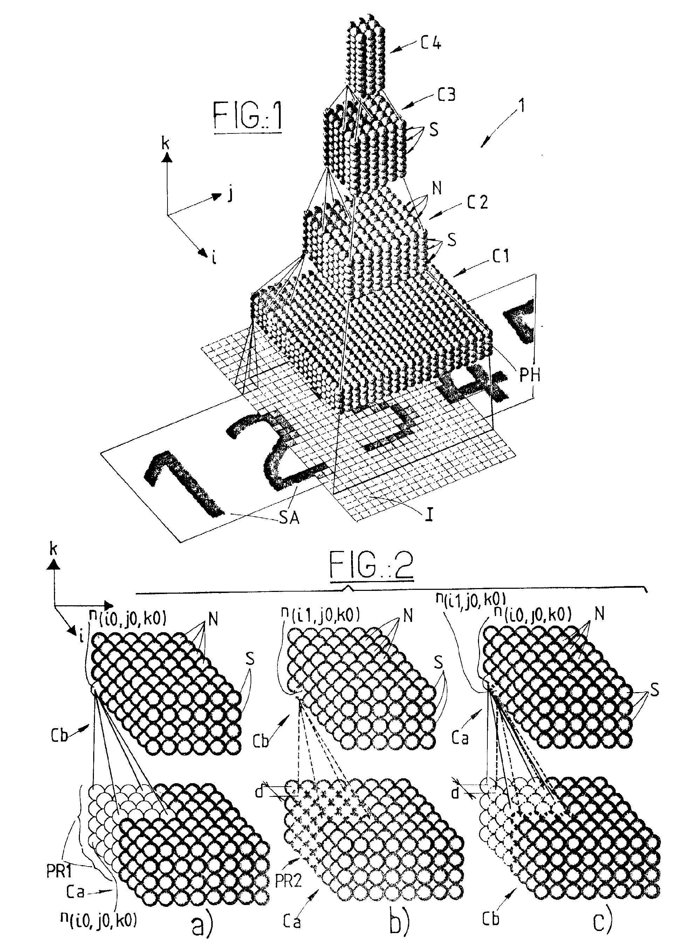

On va désormais se référer à la figure 1 qui est une représentation symbolique d'un exemple d'un réseau neuronal 1 connu auquel peut être appliqué le procédé de calcul selon l'invention.

Dans cet exemple, il est supposé que le réseau neuronal 1 comporte une matrice de cellules photoélectriques fournissant l'information d'entrée au réseau neuronal 1, cette matrice observant une image I composée ici d'une série de signes alphanumériques SA que le réseau neuronal doit analyser.

Toutefois, l'invention n'est pas limitée à l'analyse de signaux optiques. Ainsi, le procédé selon l'invention peut être appliqué à des réseaux neuronaux dont l'information d'entrée est de toute nature, en fonction de celle de la matrice de capteurs utilisée à son entrée. De même, la configuration du réseau neuronal représentée à la figure 1 n'est qu'un exemple parmi la multitude de configurations possibles qui dépendent de la façon dont on souhaite analyser l'information d'entrée.

Selon une convention de terminologie adoptée dans le présent exposé et dans l'exemple représenté, le réseau neuronal 1 comporte quatre couches C1 à C4 de neurones, chaque couche comprenant un certain nombre de sous-couches S, l'agencement pouvant être décrit par le tableau suivant:

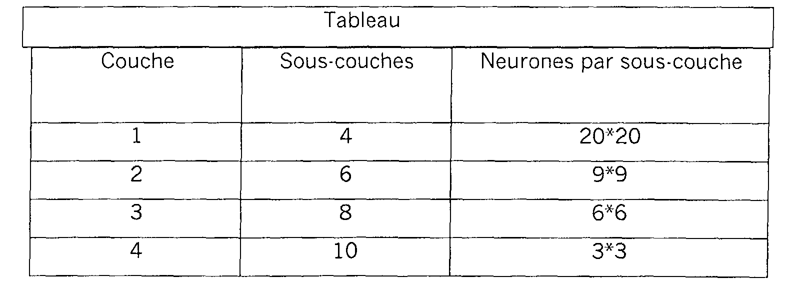

Cependant, les spécialistes comprendront que la représentation en perspective du réseau neuronal 1 montré sur la figure 1 n'est que symbolique, l'agencement physique des neurones N pouvant être quelconque et déterminé surtout par les contraintes d'implémentation sur une puce de circuit intégré. En outre, chaque neurone N est symbolisé par une bille alors que bien entendu, il est constitué en fait d'un circuit électronique dont la structure peut être connue en soi. On notera également que le réseau neuronal 1 coopère avec des moyens d'adressage également connu en soi, permettant sélectivement d'y introduire des signaux d'entrée et d'en extraire des signaux de sortie et d'adresser chacun des neurones N qui le composent.

La sous-couche inférieure de la couche inférieure C1, c'est à dire celle qui "voit" l'image I, est formée de capteurs photo-électriques; cette sous-couche porte ainsi le repère PH. Le signal de sortie du réseau neuronal est fourni par les neurones de la dernière couche C4.

Pour repérer les neurones dans le réseau neuronal 1, on définit en outre un système de coordonnés tridimensionnel d'axes (i, j, k) tel que représenté à côté du réseau neuronal 1 de la figure 1.

Pour le calcul des valeurs des neurones "cibles", les règles de calcul suivantes s'appliquent de préférence dans le cadre du procédé de calcul selon l'invention. Ces règles sont utilisées dans la plupart des réseaux neuronaux connus. Les termes "précédent", "suivant", "inférieur" et "supérieur" s'étendent ici par rapport à la direction de progression générale de l'information dans le réseau neuronal 1 qui, dans l'exemple de la figure 1, est considérée comme allant de l'image I vers la dernière couche C4. En outre, on appellera "neurone source" tout neurone dont la valeur sert à participer au calcul de celle d'un autre neurone, ce dernier étant appelé "neurone cible".

**Règle A:** La valeur à calculer d'un neurone cible quelconque est déterminée par les valeurs d'un nombre prédéterminé de neurones sources de la couche précédente, ces neurones sources formant un parallélépipède, de préférence rectangle, dans la représentation symbolique du réseau neuronal 1 conforme à l'illustration de la figure 1.

**Règle B:** La valeur d'un neurone cible à calculer adjacent, avec un décalage d'un pas, à un neurone cible qui vient d'être calculé dans la même sous-couche du réseau neuronal 1, est déterminée également par un même nombre de neurones sources formant un parallélépipède identique de la couche précédente décalé d'un même pas.

**Règle C:** La valeur d'un neurone cible quelconque du réseau neuronal 1 est obtenue par l'accumulation de produits formés d'une part par les valeurs du groupe de neurones sources du parallélépipède concerné multipliées par un groupe d'autant de facteurs appelés "poids", à raison d'un poids propre à chaque neurone, ce groupe de poids étant identique pour tous les neurones cibles d'une même sous-couche de la couche supérieure.

**Règle D:** Tous les neurones d'une même colonne de neurones (agencés selon l'axe (k)) sont déterminés par les mêmes signaux d'entrée (c'est-à-dire avec les mêmes neurones sources ; ce qui, là encore, permet de réduire le nombre des accès aux mémoires et, par suite, la consommation).

Les règles de calcul des valeurs de neurone qui viennent d'être énoncées, sont illustrées par les représentations symboliques a), b) et c) de la figure 2.

Sur la figure 2, on a représenté arbitrairement des portions de deux couches Ca et Cb du réseau neuronal 1, chacune de ces couches comprenant ici quatre sous-couches S de neurones N. Dans cette figure, on prend comme origine de repérage de ces neurones, celui qui se trouve à l'angle inférieur gauche de la couche Ca ou de la couche Cb, que l'on désignera par n_{(i0,j0,k0)}.

On voit sur la figure 2a que la valeur d'un neurone cible n_{(i0,j0,k0)} de la sous-couche S inférieure de la couche Cb supérieure est déterminée par un groupe de neurones sources de la couche inférieure Ca formant un parallélépipède rectangle PR1. Dans l'exemple décrit, ce dernier est un cube dont les côtés englobent chacun quatre*quatre*quatre neurones, les angles de ce parallélépipède PR1 étant formés par les neurones sources n_{(i0,j0,k0)}, n_{(i0,j0,k3)}, n_{(i0,j3,k3)}, n_{(i0,j3,k0)}, n_{(i3,j3,k3)}, n_{(i3,j3,k0)}, n_{(i3,j0,k0)} et n_{(i3,j0,k3)}. Comme indiqué précédemment, tous les neurones cibles d'une même colonne étant calculés à partir des mêmes neurones sources, il est alors possible de ne charger la valeur de ces derniers qu'une seule fois pour toute une colonne de neurones cibles.

Sur la figure 2b, on voit que la valeur du neurone cible n_{(i1,j0,k0)} situé dans la même sous-couche que le neurone cible n_{(i0,j0,k0)} et présentant dans cette sous-couche un décalage d (ici d'un neurone) dans la direction de l'axe i, est déterminée par un autre groupe de neurones sources de la couche inférieure Ca formant également dans le présent exemple un cube PR2 ayant quatre*quatre*quatre neurones par côté. Les neurones se trouvant aux angles de ce second parallélépipède PR2 ont donc une coordonnée selon l'axe i décalée également d'un neurone. Comme dans ce cas les neurones cibles n_{(i0,j0,k0)} et n_{(i1,j0,k0)} sont situés dans la même sous-couche, le calcul de leur valeur utilise un même jeu de soixante quatre poids affectant respectivement les neurones sources des deux parallélépipèdes PR1 et PR2. De plus, les deux parallélépipèdes PR1 et PR2 étant adjacents, ils ont en commun 32 neurones et, là encore, une économie d'accès aux mémoires peut être réalisée.

Ainsi, pour calculer la valeur d'un neurone cible quelconque de coordonnées n(_{ix,jx,kx}), il faut donc multiplier la valeur de chaque neurone source qui contribue à former cette valeur du neurone cible, par le poids affectant ce neurone source et accumuler les résultats intermédiaires résultant de toutes ces multiplications.

La figure 2c reflète l'un des aspects du concept qui est à la base de la présente invention, savoir que pour calculer les valeurs de deux neurones cibles adjacents, par exemple celles des neurones n_{(i0,j0,k0)} et n_{(i1,j0,k0)}, le calcul utilise les valeurs des neurones sources qu'ont en commun les parallélépipèdes, ici PR1 et PR2, dont les neurones sources donnent naissance aux valeurs des deux neurones cibles à calculer. Dans l'exemple représenté sur la figure 2, ce sont les trois quarts des neurones du parallélépipède PR1, soit 32 neurones, qui vont de nouveau être utilisés pour le calcul suivant à l'aide des neurones sources du parallélépipède PR2.

Le deuxième aspect du concept de l'invention consiste en ce que lorsque les neurones cibles sont situés dans la même sous-couche S, l'ensemble des poids affectant les neurones est utilisé à nouveau.

Enfin, selon un troisième aspect déjà mentionné, tous les neurones cibles d'une même colonne sont calculés à partir des mêmes neurones sources.

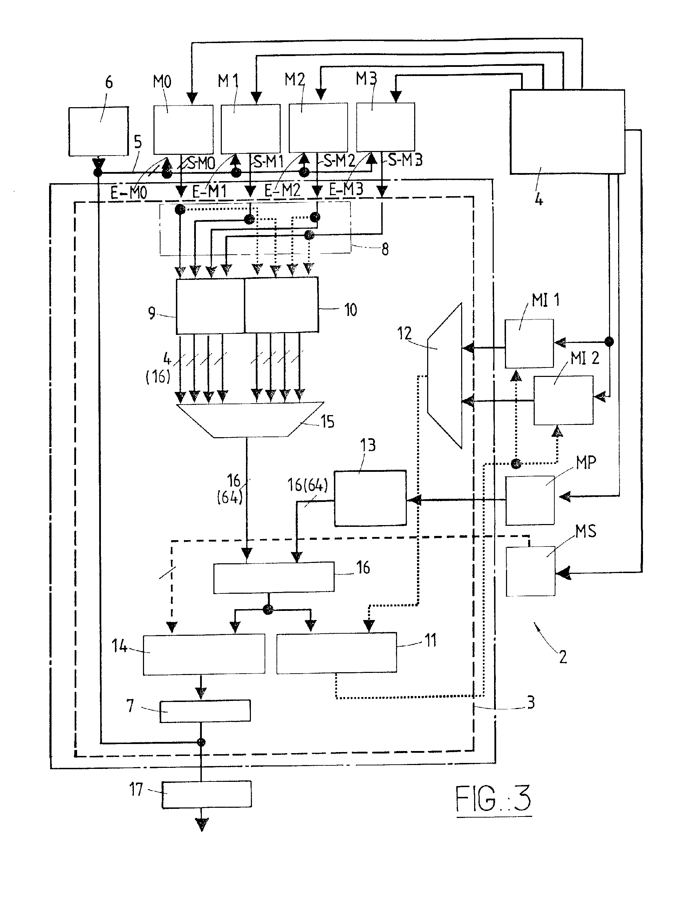

La figure 3 représente un schéma-bloc d'un exemple de dispositif de calcul 2 capable de mettre en oeuvre le procédé selon l'invention et comprenant une unité de calcul 3 et plusieurs mémoires coopérant avec une unité de calcul d'adresses 4. On verra par la suite que ce dispositif de calcul 2 peut être réalisé selon différentes variantes dont la plus simple va maintenant être décrite.

Le dispositif de calcul 2 comprend quatre mémoires M0 à M3 destinées à mémoriser des valeurs de neurones N du réseau neuronal 1. Le chargement de ces valeurs est effectué au début d'un processus de calcul pour tous les neurones par l'intermédiaire d'entrées E-M0 à E-M3 connectées à une ligne 5. Celle-ci est connectée à un bloc d'entrée 6 destiné à transmettre aux mémoires M0 à M3 les valeurs des neurones se trouvant dans la sous-couche PH inférieure de la couche C1, c'est à dire des neurones qui captent l'information de l'image I. La ligne 5 est également reliée à un registre de sortie 7 pour permettre la transmission vers les mémoires M0 à M3 des valeurs de neurone qui viennent d'être calculées dans l'unité de calcul 3 et qui vont se substituer aux valeurs antérieures des neurones cibles correspondants.

Les sorties S-M0 à S-M3 des mémoires M0 à M3 sont reliées à un aiguillage 8 capable de répartir, selon un processus encore à décrire, les valeurs de neurone stockées dans les mémoires M0 à M3 dans deux bancs de registres 9 et 10 de l'unité de calcul 3.

Le dispositif de calcul 2 comprend également deux mémoires intermédiaires MI1 et MI2 dont les entrées sont connectées à la sortie d'un additionneur 11 et dont les sorties sont reliées à un multiplexeur 12.

Il est également prévu une mémoire de poids MP dont la sortie est connectée à un banc de registres de poids 13, et une mémoire de seuils MS connectée à un bloc de comparaison 14.

Les mémoires M0 à M3 et les mémoires MI1 et MI2 sont de type RAM, tandis que les mémoires MP et MS sont de type ROM.

Les sorties des bancs de registres 9 et 10 sont reliées à un arbre de multiplexeurs 15. La sortie de ce dernier et la sortie du banc de registres 13 sont reliées à un bloc de multiplication et d'accumulation 16 dont la sortie est raccordée à la fois au comparateur 14 et à l'additionneur 11. Celui-ci reçoit également les sorties du multiplexeur 12.

Il est à noter que les valeurs des neurones N peuvent être codées de toute manière appropriée, un codage binaire étant préféré. Elles peuvent s'exprimer en un nombre de bits qui est choisi en fonction de la résolution que l'on souhaite affecter à ces valeurs de neurone.

Le résultat d'un cycle complet de calcul est prélevé sur le registre de sortie 7, par exemple sur les sous-couches S de la couche C4 (figure 1) par un circuit d'exploitation 17. Dans l'exemple représenté où le réseau neuronal 1 est destiné à lire les chiffres de 1 à 10 avec lesquels l'image I est composée, l'information numérique de sortie apparaît respectivement sur les dix sous-couches S de la couche C4.

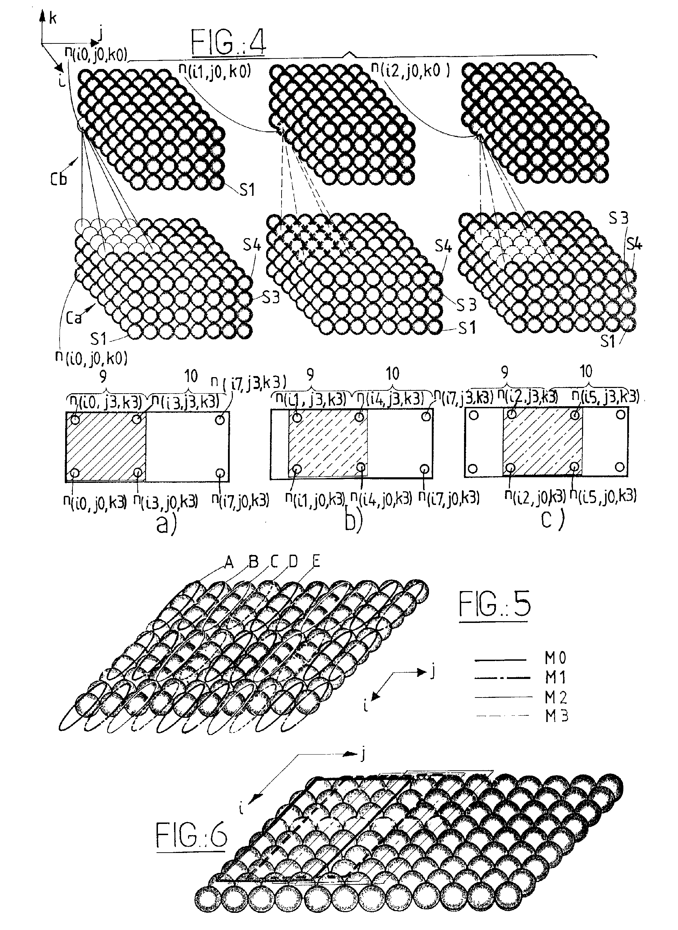

On va maintenant décrire les opérations de calcul nécessaires pour obtenir la valeur des neurones cibles en se référant à la figure 3 déjà décrite et aux figures 4 à 6 auxquelles on se réfèrera au fur et à mesure de cette description.

On rappelle que pour le calcul d'une couche donnée du réseau neuronal 1, l'ensemble des valeurs des neurones de la couche précédente sont rangées en mémoire. Ce rangement est effectué de préférence selon un schéma de mémorisation illustré sur la figure 5. Il est effectué dans les mémoires M0 à M3 à raison de jeux de quatre valeurs de neurone par mémoire, avec chaque fois quatre jeux contigus de quatre valeurs rangées respectivement dans les quatre mémoires. Ainsi, les valeurs de quatre jeux A de chacun quatre neurones, tous disposés selon l'axe i sont rangées dans la mémoire M0, celles des quatre jeux B de chaque fois quatre neurones tous disposés selon l'axe i, et respectivement contigus dans la direction j aux quatre jeux A, dans la mémoire M1, celles des quatre jeux C de chacun quatre neurones également tous disposés selon l'axe i, et respectivement contigus dans la direction j aux quatre jeux B, dans la mémoire M2, celles des quatre jeux D de chacun quatre neurones également tous disposés selon l'axe i, et respectivement contigus dans la direction j aux quatre jeux C, dans la mémoire M3, celles des quatre jeux E de chacun quatre neurones également tous disposés selon l'axe i, et respectivement contigus dans la direction j aux quatre jeux D, de nouveau dans la mémoire M0, ainsi de suite.

Si un jeu comporte un nombre de neurones inférieur à quatre, les emplacements correspondants restent vides dans les mémoires M0 à M3 chaque fois concernées, comme cela est représenté sur le bord avant de la sous-couche de neurones de la figure 5.

Sur la figure 4, on a illustré une première phase d'un calcul effectué dans le dispositif de calcul 2, réalisé selon une première variante d'exécution. Pendant cette phase choisie à titre d'exemple, on constitue un premier résultat intermédiaire de toutes les valeurs des neurones cibles situés dans la sous-couche S1 de la couche Cb. La description qui va suivre concerne seulement les trois premiers neurones cibles n_{(i0,j0,k0)}, n_{(i1,j0,k0)} et n_{(i2,j0,k0)} de cette sous-couche S1, le calcul des résultats intermédiaires analogues des valeurs des autres neurones cibles situées dans cette sous-couche S1 se déroulant de la même façon (Il est à noter que la même convention de désignation des neurones que celle de la figure 2 est ici utilisée).

Dans la variante du dispositif de calcul 2 envisagée à présent, pour chaque neurone cible, il est d'abord procédé au calcul de 16 produits formés des valeurs de 16 neurones sources à la fois multipliées par 16 poids, ces produits étant accumulés pour former un résultat intermédiaire.

Ainsi, en se référant à la fois aux figures 3 et 4, les trente deux valeurs des neurones sources du rectangle aux angles duquel sont situés les neurones n_{(i0,j0,k3)}, n_{(i7,j0,k3)}, n_{(i7,j3,k3)} et n_{(i0,j3,k3)} vont être extraites respectivement des mémoires M0 à M3 dans lesquelles elles avaient été rangées au départ. Par une commande appropriée de l'arbre de multiplexeurs 15, ces valeurs vont ensuite être utilisées par groupes de 16 valeurs pour être multipliées chaque fois par les mêmes seize valeurs de poids placées seulement une fois dans le banc de registres de poids 13 à partir de la mémoire de poids M3.

Le premier groupe de valeurs provient des neurones sources contenus dans le carré (c'est à dire la "tranche" du parallélépipède PR1, figure 2) dont les angles sont formés par les neurones n_{(i0,j0,k3)}, n_{(i3,j0,k3)}, n_{(i3,j3,k3)} et n_{(i0,j3,k3)}. (Voir la représentation en bas de la figure 4a). Dans le bloc 16, les 16 valeurs correspondantes sont multipliées par leurs 16 poids respectifs et les produits sont accumulés. Le résultat intermédiaire est placé dans l'une des mémoires intermédiaires M11 ou MI2 pour pouvoir ultérieurement être affecté au neurone n_{(i0,j0,k0)} de la sous-couche S1.

Puis, un nouveau groupe de seize valeurs correspondant aux neurones sources n_{(i1,j0,k3)}, n_{(i4,j0,k3)}, n_{(i4,j3,k3)} et n_{(i1,j3,k3)}, groupe qui est décalé selon l'axe i du pas d correspondant à un neurone, est sorti du banc de registres 9 et réparti à l'aide de l'arbre de multiplexeurs 15. Les valeurs de ce nouveau groupe de neurones sources sont également multipliées par les mêmes seize valeurs de poids se trouvant encore dans le banc 13 et les produits sont accumulés. Le résultat intermédiaire est placé dans l'autre des mémoires intermédiaires MI1 ou MI2 pour pouvoir ensuite être affecté au neurone cible n_{(i1,j0,k0)} (voir le bas de la figure 4b).

Puis, le groupe suivant de seize valeurs des neurones n_{(i2,j0,k3)}, n_{(i5,j0,k3)}, n_{(i5,j3,k3)} et n_{(i2,j3,k3)} est extrait des bancs de registres 9 et 10 et après avoir été réparti par l'arbre de multiplexeurs 15 ce groupe est traité de la même façon toujours à l'aide du même groupe de poids se trouvant dans le banc 13.

Lorsque les seize groupes chargés dans les deux bancs 9 et 10 ont été traités, seize nouveaux groupes suivants de valeurs de neurones sources en considérant l'axe i sont alors chargés et les opérations précédemment décrites renouvelées. Lorsque ensuite selon cet axe, il n'y a plus de valeurs de neurone à traiter, il est procédé à un décalage d'un pas d correspondant à un neurone dans le sens de l'axe j (voir figure 6) et le même processus de calcul se poursuit par groupe de seize valeurs en utilisant toujours les mêmes valeurs de poids contenus dans le banc 13.

Lorsque toutes les valeurs des neurones sources de la sous-couche supérieure S4 de la couche inférieure Ca ont été prises en compte et les résultats intermédiaires stockés dans les mémoires MI1 et MI2, le procédé se poursuit avec un traitement analogue des valeurs des neurones sources de la sous-couche S3, sous-jacente à la couche S4 dans la couche Ca, le calcul pouvant se faire, comme déjà décrit, avec seize valeurs à la fois, cependant que seize nouvelles valeurs de poids doivent être chargées dans le banc de poids 13 en provenance de la mémoire de poids MP.

Les résultats intermédiaires obtenus pendant ces calculs sont placés dans l'autre mémoire intermédiaire MI1 ou MI2 et rangés de telle façon qu'ils puissent être accumulés dans l'additionneur 11 avec les résultats intermédiaires précédemment calculés, étant entendu que pour un neurone cible donné seuls les résultats intermédiaires le concernant sont pris en compte. Le résultat accumulé est de nouveau placé dans l'un des mémoires intermédiaires MI1 ou MI2 pour pouvoir en être extrait lorsque le calcul concernera les seize nouvelles valeurs relatives au neurone cible considéré, ces nouvelles valeurs provenant alors des neurones sources situés dans la sous-couche S2.

Lorsque les valeurs des neurones sources des quatre sous-couches S1 à S4 de la couche inférieure Ca ont ainsi été utilisées, on disposera de la valeur recherchée de tous les neurones cibles de la sous-couche S1. Ces valeurs sont soumises au fur et à mesure de leur production, dans le comparateur 14, à un seuil prélevé dans la mémoire de valeurs de seuil MS pour qu'elles puissent être ramenées à la résolution qui a été fixée pour l'ensemble des calculs (opération appelé "seuillage" par les spécialistes). Les valeurs résultantes issues du comparateur 14 sont passées dans le registre de sortie 7 d'où elles sont transmises soit vers les mémoires M0 à M3 pour être utilisées pour de nouveaux calculs, soit vers le bloc de sortie 17 pour être exploitées en sortie, s'il s'agit des neurones cibles de la dernière couche du réseau neuronal 1. De manière générale, le nombre de couches, de sous-couches et les dimensions des parallélépipèdes de départ pourront être adaptés en fonction de l'application.

Selon une autre variante de l'invention, il est possible de réduire davantage le nombre d'accès mémoire nécessaires. A cet effet, au lieu de traiter à la fois seize valeurs de neurones sources, il est possible de traiter à la fois toutes les valeurs des neurones sources d'un parallélépipède entier. Par exemple, en se référant à la figure 2a, on peut travailler sur l'ensemble des neurones du parallélépipède PR1, ce qui revient à augmenter le parallélisme des calculs. Dans ce cas, les bancs de registres 9 et 10 doivent stocker chacun soixante quatre valeurs réparties par l'arbre de multiplexage 15 de telle manière que le bloc de calcul 16 traite à chaque fois soixante quatre valeurs en même temps. Le registre de poids doit alors pouvoir contenir soixante quatre valeurs de poids extraites d'un coup de la mémoire de poids MP.

Selon une troisième variante de l'invention, il est également possible de prévoir une pluralité d'unités de calcul 3 travaillant en parallèle.

Les deuxième et troisième variantes du dispositif de calcul 2 nécessitent davantage de matériel mais étant donné qu'elles réduisent considérablement les accès aux mémoires, elles ont l'avantage de travailler plus rapidement et de réduire la consommation globale.

## Revendications

1. Procédé de calcul des valeurs des neurones (N) dans un réseau neuronal (1) comprenant une pluralité de couches (C1 à C4) de neurones (N), chacune de ces couches comprenant une pluralité de sous-couches (S) de neurones, la valeur de chaque neurone (appelé alors "neurone cible") étant déterminée par l'accumulation de produits formés d'une part des valeurs d'une pluralité de neurones (appelés alors neurones sources") formant dans la représentation symbolique du réseau neuronal (1) un parallélépipède (PR1, PR2) dans la couche sous-jacente (Ca) du réseau neuronal (1), et d'autre part par les valeurs respectives d'autant de poids propres à chacun des neurones sources de ce parallélépipède (PR1, PR2), les valeurs desdits poids étant respectivement les mêmes dans chaque parallélépipède déterminant les valeurs des neurones cibles dans une même sous-couche (S) quelconque de la couche sur-jacente (Cb),
**caractérisé en ce qu'**il consiste, pour le calcul des produits déterminant les valeurs des neurones cibles d'une même sous-couche quelconque du réseau,
a) à mémoriser temporairement au moins un groupe de poids affectant les neurones sources déterminant les valeurs de ces neurones cibles,
b) à calculer successivement les produits de tous les neurones cibles de la sous-couche considérée,
c) à stocker temporairement tous les produits ainsi obtenus relatifs à tous les neurones cibles considérés, et
d) à accumuler les produits respectifs obtenus pour chaque neurone cible pour former la valeur de celui-ci.

2. Procédé selon la revendication 1, **caractérisé en ce que** ledit groupe de poids est formé par des poids affectant les neurones sources situées dans une tranche de neurones sources de chacun desdits parallélépipèdes (PR1, PR2) correspondant à une sous-couche (S), et **en ce qu'**il consiste à effectuer l'opération b) successivement pour toutes les tranches de neurones sources situées dans une même sous-couche de neurones sources avant de procéder à l'opération d'accumulation.

3. Procédé selon la revendication 1, **caractérisé en ce que** ledit groupe de poids est formé par des poids affectant tous les neurones sources de chacun desdits parallélépipèdes (PR1, PR2) et **en ce qu'**il consiste à effectuer l'opération b) à la fois pour tous les neurones sources situés dans ce parallélépipède avant de procéder à l'opération d'accumulation.

4. Procédé selon la revendication 3, **caractérisé en ce qu'**il consiste à calculer en parallèle les produits formés de poids affectant tous les neurones sources d'une pluralité desdits parallélépipèdes (PR1, PR2) et les valeurs des neurones sources y afférentes.

5. Procédé selon l'une quelconque des revendications précédentes, **caractérisé en ce que** les produits devant être accumulés pour constituer les valeurs des neurones cibles d'une même sous-couche sont calculés successivement en décalant chaque fois dans la couche sous-jacente d'un pas prédéterminé (d) les neurones sources afférents à ces produits.

6. Procédé selon la revendication 5, **caractérisé en ce que** ledit décalage (d) est effectué d'abord dans une première direction (i) du plan de la couche sous-jacente considérée, puis dans une seconde direction (j) perpendiculaire à cette première direction.

7. Procédé selon la revendication 1, **caractérisé en ce que** lesdits parallélépipèdes sont des parallélépipèdes rectangles (PR1, PR2).

8. Dispositif de calcul pour la mise en oeuvre du procédé suivant l'une quelconque des revendications précédentes, **caractérisé en ce qu'**il comprend:
des premiers moyens de mémorisation (M0 à M3) pour stocker des valeurs de neurones sources selon un schéma de rangement prédéterminé,
des seconds moyens de mémorisation (MP) pour mémoriser des poids affectant respectivement tous les neurones (N) dudit réseau neuronal (1),
des premiers moyens de mémorisation temporaire (9, 10) pour stocker temporairement une partie prédéterminée des valeurs de neurones sources mémorisées dans lesdits premiers moyens de mémorisation (M0 à M3), cette partie prédéterminée comprenant au moins un jeu de valeurs de neurones sources contribuant à former les valeurs de neurones cibles situés dans une même sous-couche (S) dudit réseau neuronal (1),
des seconds moyens de mémorisation temporaire (13) pour stocker temporairement des groupes prédéterminés de poids extraits desdits seconds moyens de mémorisation (MP), chaque groupe de poids afférent à l'un desdits jeux des valeurs de neurones sources,
des troisièmes moyens de mémorisation temporaire (MI1, MI2) pour stocker des résultats intermédiaires de calcul,
des moyens de calcul (16) agencés pour former successivement des résultats intermédiaires constitués de produits des valeurs des neurones sources appartenant auxdits jeux de neurones sources et des poids y afférents, ces moyens de calcul étant également agencés pour placer lesdits résultats intermédiaires dans lesdits troisièmes moyens de mémorisation temporaires (MI1, MI2),
et des moyens d'accumulation (11) pour accumuler les résultats intermédiaires stockés dans lesdits troisièmes moyens de mémorisation temporaires (MI1, MI2) et afférents respectivement à un même neurone cible.

9. Dispositif suivant la revendication 8, **caractérisé en ce que** lesdits premiers moyens de mémorisation temporaire (9, 10) comprennent deux bancs de registres dont chacun présente une capacité de stockage permettant de mémoriser ladite partie prédéterminée des valeurs de neurones sources.
